# EUROPÄISCHE PATENTSCHRIFT

(11) **EP 0 487 841 B1**
(45) Veröffentlichungstag und Bekanntmachung des Hinweises auf die Patenterteilung: **01.03.1995**
(21) Anmeldenummer: 91114788.2
(22) Anmeldetag: 03.09.1991
(51) Int. Cl.: B65G 49/08, B65G 57/26, B28B 13/04

(54) **Verfahren und Vorrichtung zum Herstellen von extrudierten keramischen Formlingen**
Method of and device for producing extruded ceramic mouldings
Procédé et dispositif pour fabriquer des objets moulés extrudés en céramique

(30) Priorität: 27.11.1990 DE 4037593
(43) Veröffentlichungstag der Anmeldung: 03.06.1992
(73) Patentinhaber: Hans Lingl Anlagenbau und Verfahrenstechnik GmbH & Co. KG, D-89231 Neu-Ulm (DE)
(72) Erfinder: Simon, Helmut, W-8908 Krumbach (DE)

(56) Entgegenhaltungen:
- DD-A- 51 233
- DE-B- 1 433 928

## Beschreibung

Die Erfindung betrifft eine Vorrichtung zum Umsetzen von extrudierten keramischen Formlingen, insbesondere von Vormauerziegeln und Vormauerziegelsonderformaten mit unregelmäßig geformten Sichtflächen, die ausreichend steif extrudiert, im Türmchenbesatz auf Plateauwagen zum Trocknen und/oder Brennen gestapelt werden gemäß dem Oberbegriff des Patentanspruchs 1.

Beim Herstellen von Vormauerziegeln ist es ein Problem, generell fehlerlose Sichtflächen zu erreichen und vor allem beim Brennen eine gleichmäßige Brennfarbe bzw. ein gleichmäßiges Farbbild zu erzielen. Auch sind Sonderformate herzustellen, die in herkömmlichen Betrieben meist separat und umständlich von Hand produziert werden müssen.

Es ist bekannt, Ziegel steifgepreßt zu schneiden, zu kippen und mittels Greifern als Reihen oder auch Türmchen auf Ofenwagen zum Trocknen und Brennen zu stapeln, wobei alle Ziegel in die gleiche Richtung gekippt auch mit mechanischen Greifern umgesetzt werden oder reihenweise mit Sauggreifern aufgegriffen und reihenweise gekippt oder umgekippt auf Ofenwagen umgesetzt werden (DE-B-1433 928).

Bei den bekannten Vorrichtungen ist im Türmchen- oder Reihenbesatz jeweils eine Schauseite der Rückseite des nächsten Ziegels zugewandt, wodurch beim Brennen, vor allem beim Reduzieren, ein unterschiedliches Farbbild auf den Ziegeln entsteht, das oft nicht gewünscht ist. Das Aufnehmen der Ziegel mit einem Sauggreifer erfolgt bekannterweise über die Sichtfläche oder, wenn die Ziegel flach herangeführt werden, über eine Schnittfläche. Im ersten Falle kann der Sauggreifer Markierungen auf der Sichtfläche hinterlassen, die unerwünscht sind. Zudem sind Sonderformate mit komplizierter Oberfläche nur mit speziellen Greifern umzusetzen, was in jedem Falle auch eine Kostenfrage ist wegen der dazu erforderlichen komplizierten Werkzeuge. Im anderen Falle ist ein komplizierter Greifer erforderlich, der den verschiedenen Formatgrößen angepaßt sein muß sowie der Lochung oder dem Gitter im Stein.

Aufgabe der Erfindung ist es demnach ein Verfahren und eine Vorrichtung zum Herstellen von extrudierten keramischen Formlingen zu schaffen, mit der diese so gesetzt werden, daß beim Brennen alle Sichtflächen exponiert und gleichmäßig beaufschlagbar sind, wobei zum Setzen die Sichtflächen nicht berührt werden und mit einem einfachen Werkzeug Formate mit unterschiedlicher Lochung und komplexen Sichtflächen gesetzt werden können.

Die Aufgabe wird erfindungsgemäß durch die im kennzeichnenden Teil der Ansprüche 1 und 2 angegebenen Maßnahmen gelöst.

Das erfindungsgemäße Verfahren hat den Vorteil, daß die Sichtflächen jeweils außen liegen, so daß eine Reformierung derselben beim Umsetzen nicht möglich ist und zugleich beim Brennen ein gleichmäßiges Farbbild auf den Sichtflächen aller Formlinge erzielt wird.

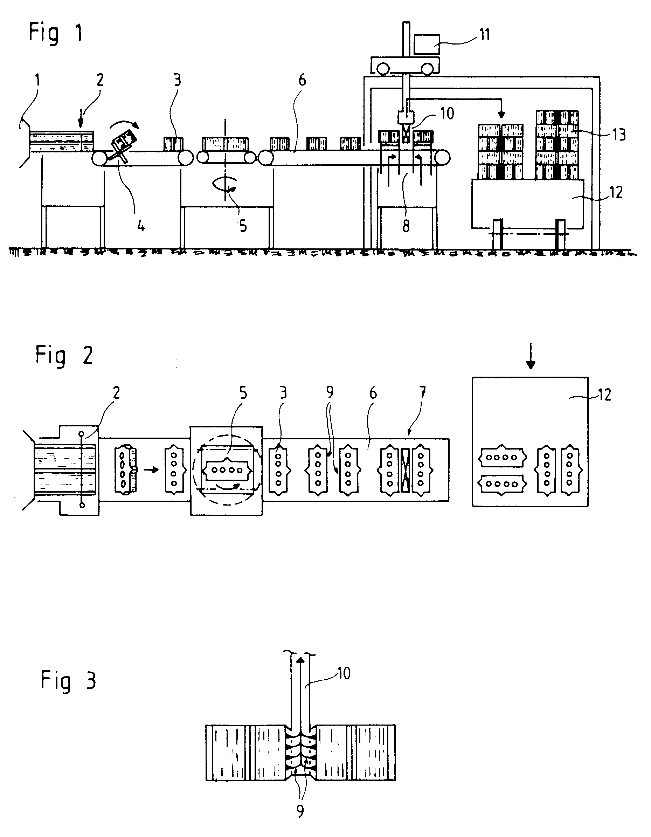

Ein Ausführungsbeispiel der Erfindung ist in der Zeichnung dargestellt und wird im folgenden näher beschrieben. Es zeigen
- Fig. 1: eine Seitenansicht der Vorrichtung
- Fig. 2: eine Draufsicht
- Fig. 3: den Greifer mit 2 Formlingen.

Die mit Extruder 1 und nachfolgendem Abschneider 2 geschnittenen Formlinge 3 werden nach dem Schneiden mit einem Kippstern 4 in eine Flachlage gebracht und anschließend jeder zweite Formling 3 mittels einer einschaltbaren Drehvorrichtung 5, beispielsweise ein drehbares, heb- und senkbares Förderband, um 180° gedreht und mit einem Förderer 6 in eine Aufstellposition gebracht, in der die Formlinge 3 paarweise durch eine Hubeinrichtung 8 vom Förderer 6 abgehoben und mit ihren geraden Rückseiten 9 gegen einen Vakuumgreifer 10 gehoben werden, der, doppelseitig wirkend, die Rückseiten 9 der Formlinge 3 ansaugt.

Mit einer Umsetzeinrichtung 11, die es ermöglicht, das Ziegelpaar zu heben, um 90 Grad zu drehen und in Richtung Ofenwagen 12 zu verfahren, werden die Formlinge 3 auf dem Ofenwagen 12 zu Türmchen 13 mit jeweils um 90 Grad verdrehten Lagen für das nachfolgende Trocknen und Brennen gestapelt.

Selbstverständlich ist es möglich, eine Umsetzeinrichtung mit mehreren, separat drehbaren Sauggreifern vorzusehen, um mehrere Türmchen gleichzeitig zu bauen.

## Patentansprüche

1. Verfahren zum Herstellen von keramischen Formlingen, insbesondere von Vormauerziegeln und solchen mit unregelmässig geformten Sichtflächen, bei dem nach dem Extrudierten und Schneiden die Formlinge in die Flachlage gekippt und in einer Aufstellposition transportiert, von dort auf einen Ofenwagen zum Bilden von Stapeln umgesetzt werden,
**dadurch gekennzeichnet,**
daß nach dem Kippvorgang jeder zweite Formling um eine senkrechte Achse um 180° gedreht und zusammen mit dem jeweils ersten Formling in der Aufstellposition ein Formlingspaar bildet, das an seinen einander zugekehrten Rückseiten erfaßt und umgesetzt wird.

2. Vorrichtung zum Durchführen des Verfahrens nach Anspruch 1, mit einem Extruder (1), einem Abschneider (2), einer Kippeinrichtung (4), einem Formlingsförderer und einer verfahrbaren Umsetzeinrichtung (11),
**dadurch gekennzeichnet,**
daß hinter der Kippeinrichtung (4) eine Förder- und Drehvorrichtung (5) angebracht ist wobei die Drehvorrichtung (5) jeden zweiten Formling um eine senkrechte Achse um 180° drehen kann, und
daß die Umsetzeinrichtung (11) doppelt wirkende Vakuumgreifer (10) enthält, die zwischen die Formlinge (3) eines Formlingpaares tauchend deren Rückseiten ansaugen.

3. Vorrichtung nach Anspruch 2,
**dadurch gekennzeichnet,**
daß in einer Aufstellposition (7) eine die Formlingspaare von deren Förderer (6) gegen die Greifer (10) der Umsetzeinrichtung anhebende Hubeinrichtung (8) vorgesehen ist

4. Vorrichtung nach Anspruch 2,
**dadurch gekennzeichnet,**
daß die Umsetzeinrichtung (11) mehrere separat drehbare Sauggreifer enthält.

## Claims

1. A method for the production of green bricks, in particular face bricks and bricks with irregularly shaped exposed surfaces, whereby the extruded and cut green bricks are tipped into the flat position, conveyed to a grouping station and then transferred to a kiln car to form stacks,
**characterized in that**
after the tipping operation every second green brick is turned by 180° about a vertical axis and together with the respective first green brick forms a pair of green bricks in the grouping station which is gripped at the backs of the bricks facing each other and then transferred.

2. A device for performing the method claimed in Claim 1, comprising an extruder (1), a cutter (2), a tipping device (4), a conveyor for transporting the green bricks and a movable transfer device (11),
**characterized in that**
a conveying and turning device (5) is disposed after the tipping device (4) enabling every second green brick to be turned by 180° about a vertical axis and that the transfer device (11) includes double-acting vacuum grippers (10) which are inserted between the individual bricks (3) of a pair of green bricks and suck on their backs.

3. A device as claimed in Claim 2,
**characterized in that**
in a grouping station (7) a lifting device (8) is provided which lifts the pairs of green bricks from their conveyor (6) into contact with the grippers (10) of the transfer device.

4. A device as claimed in Claim 2,
**characterized in that**
the transfer device (11) comprises a plurality of separately turntable vacuum grippers.

## Revendications

1. Procédé pour la fabrication de briques crues en céramique, essentiellement de briques de parement et de briques avec des surfaces visibles de forme irrégulière, selon lequel les briques crues sont, après l'extrusion et le découpage, basculées dans la position plate et transportées dans une position debout et ensuite transférées dans un chariot de four pour former des piles,
**caractérisé en ce que**
après chaque opération de basculement, chaque deuxième brique crue est tournée de 180° autour d'un axe vertical et forme respectivement avec chaque première brique crue une paire de briques en position debout qui est saisie sur ses faces arrières adjacentes et transférée.

2. Dispositif pour la réalisation du procédé selon la revendication 1, avec une extrudeuse (1), un coupeur (2), un basculeur (4), un convoyeur de briques crues et un dispositif de transfert déplaçable (11),
**caractérisé en ce que**
derrière le dispositif de basculement (4) se trouvent un dispositif de convoyage et un dispositif de rotation (5), le dispositif de rotation (5) pouvant tourner chaque deuxième brique crue de 180° autour d'un axe vertical, et que le dispositif de transfert (11) comporte des griffes à vide (10) à double effet, aspirant les faces arrières des briques crues d'une paire de briques en plongeant entre les briques (3).

3. Dispositif selon la revendication 2,
**caractérisé en ce que**
dans une position debout (7) est prévu un dispositif de levage (8) soulevent les paires de briques crues de leur convoyeur (6) contre les griffes à vide (10) du dispositif de transfert.

4. Dispositif selon la revendication 3,
**caractérisé en ce que**
le dispositif de transfert (11) comprend plusieurs griffes à vide tournant séparément.
